# EUROPEAN PATENT APPLICATION

(11) **EP 4 570 940 A2**
(43) Date of publication of application: **18.06.2025**
(21) Application number: 24216801.1
(22) Date of filing: 02.12.2024
(51) Int. Cl.: C22C 38/28, C22C 38/22, C22C 38/00, C22C 38/04, C22C 38/02, C22C 38/06, C22C 38/50, C22C 38/44, C21D 9/46, C21D 8/02, C21D 6/00, C22C 33/04, H01M 8/021

(54) **FERRITIC STAINLESS STEEL AND STEEL SHEET**

(30) Priority: 06.12.2023 JP 2023206521
(71) Applicant: Daido Steel Co., Ltd., Nagoya-shi Aichi 461-8581 (JP)
(72) Inventor: SOEDA, Ryoga, Aichi, 457-8545 (JP); KOYANAGI, Yoshihiko, Aichi, 457-8545 (JP); ANDO, Tomohiro, Aichi, 457-8545 (JP); FURUSHO, Chihiro, Aichi, 457-8545 (JP)
(74) Representative: Diehl & Partner

(57) **Abstract**

The present invention relates to a ferritic stainless steel containing: C ≤ 0.03 mass%; Si ≤ 0.05 mass%; 0.30 mass% ≤ Mn ≤ 1.00 mass%; P ≤ 0.05 mass%; S ≤ 0.05 mass%; Cu ≤ 0.10 mass%; 20.0 mass% ≤ Cr ≤ 25.0 mass%; V ≤ 0.10 mass%; Co ≤ 0.10 mass%; Al ≤ 0.10 mass%; 0.01 mass% ≤ Ti ≤ 0.30 mass%; N ≤ 0.03 mass%; 0.05 mass% ≤ La ≤ 0.30 mass%; and Ni ≤ 2.00 mass%; and at least one selected from the group consisting of 0.10 mass% ≤ W ≤ 2.00 mass% and 0.10 mass% ≤ Mo < 2.00 mass%, with a balance being Fe and unavoidable impurities.

## Description

### TECHNICAL FIELD

The present invention relates to a ferritic stainless steel and a steel sheet, and more particularly to a ferritic stainless steel suitable as a separator for a solid oxide fuel cell (SOFC) or a separator for a solid oxide electrolysis cell (SOEC), and a steel sheet using the ferritic stainless steel.

### BACKGROUND ART

The ferritic stainless steel refers to a stainless steel having a ferrite structure at room temperature. The ferritic stainless steel is excellent in heat resistance, oxidation resistance, and cold workability, and has a smaller thermal expansion coefficient than other materials. Therefore, the use of the ferritic stainless steel as a separator for a solid oxide fuel cell (SOFC) or a separator for a solid oxide electrolysis cell (SOEC) has been studied.

For example, Patent Literature 1 discloses a ferritic stainless steel containing predetermined contents of Cr, C, Si, Mn, P, S, Al, N, Nb, Ni, Mo, Sn, and B, with a balance being Fe and unavoidable impurities.

Patent Literature 1 discloses that
(A) the content of Al needs to be 1.00 mass% or more in order to obtain good oxidation resistance, but in the case where the content of Al is more than 3.00 mass%, the toughness of the steel decreases,
(B) the content of Si needs to be 0.50 mass% or more in order to improve oxidation resistance under a modification environment, and
(C) such ferritic stainless steel is suitable as a high-temperature member for SOFC because of having high oxidation resistance and high high-temperature strength.

Patent Literature 2 discloses a stainless steel sheet for a separator of a fuel cell, which contains predetermined contents of C, Si, Mn, P, S, Cr, Ni, Ti, Al, and N, with a balance being Fe and unavoidable impurities.

Patent Literature 2 discloses that
(A) when a stainless steel sheet containing predetermined contents of Cr and Ti is anodized, fine precipitates containing Cr and Ti can be precipitated on a surface of the steel sheet and the contact resistance of the steel sheet can be reduced, and
(B) REM is an effective element for deoxidation, but in the case where the content of REM is more than 0.100 mass%, hot workability decreases.

Patent Literature 3 discloses a ferritic stainless steel containing predetermined contents of Cr, C, Si, Mn, Al, P, S, and N, with a balance being Fe and unavoidable impurities.

Patent Literature 3 discloses that
(A) when a texture of an Al-containing ferritic stainless steel cold-rolled and annealed sheet is optimized, creep characteristics are improved, and
(B) in the case where the content of Al is less than 0.5%, an Al-based oxide film is hardly formed, and therefore, an effect of preventing the evaporation of Cr cannot be obtained.

Patent Literature 4 discloses a steel for a separator of a solid oxide fuel cell, which contains predetermined contents of C, Si, Mn, Ni, Cr, Cu, and Al, and further contains one or two or more of Y, REM, and Zr, with a balance being Fe and unavoidable impurities.

Patent Literature 4 discloses that
(A) Si has an effect of improving an oxidation resistance of the separator, and a preferable lower limit of the content of Si is 0.05 mass%,
(B) the content of Cu needs to be more than 0.3 mass% in order to improve the oxidation resistance of the separator, and
(C) when a small amount of Y, REM, or Zr is added, the oxidation resistance and the electrical conductivity of an oxide film can be greatly improved.

The SOFC includes a single cell in which an anode (fuel electrode) and a cathode (air electrode) are joined to both surfaces of an electrolyte, and separators disposed on both sides of the single cell. The SOEC has the same structure as that of the SOFC, but causes a reaction opposite to that in the SOFC. The operating temperature of the SOFC and the SOEC reaches several hundred degrees Celsius. Therefore, the separator needs to have characteristics such as oxidation resistance, electron conductivity, and a low thermal expansion coefficient. In order to reduce the cost of the separator, the material for the separator also needs to be easily processed.

In this regard, the ferritic stainless steels described in Patent Literatures 1 and 3 have a large thermal expansion coefficient because the content of Al is excessive. In addition, when used in a high-temperature oxidizing atmosphere, an Al-based oxide is formed on the surface, and the electron conductivity tends to decrease.

In addition, in the steel for a separator described in Patent Literature 4, the content of Si is excessive, and thus, the formation of a dense Mn-based oxide (an oxide having Cr volatilization resistance) in the outermost layer of the separator may be hindered.

Patent Literatures 2 and 4 disclose that the addition of REM (so-called "mischmetal") is effective in improving the oxidation resistance, but Ce contained in REM has a large effect of decreasing the hot workability of stainless steel. In addition, when excessive N is contained in the stainless steel, REM is bonded to N to form precipitates, and the effect of addition of REM (for example, improvement in oxidation resistance) may be lost.

In Patent Literature 4, the upper limit of the content of C is 0.2 mass%, but the limitation of the amount of C added is lax, and there is a possibility of sensitization.

### CITATION LIST

### PATENT LITERATURE

Patent Literature 1: JP2020-066792A
Patent Literature 2: WO2017/212905
Patent Literature 3: JP2018-080371A
Patent Literature 4: JP2005-320625A

### SUMMARY OF INVENTION

An object of the present invention is to provide a ferritic stainless steel having a relatively small thermal expansion coefficient and excellent electron conductivity, oxidation resistance, and hot workability, and a steel sheet using the ferritic stainless steel.

In order to achieve the above object, a ferritic stainless steel according to the present invention contains:
C ≤ 0.03 mass%;
Si ≤ 0.05 mass%;
0.30 mass% ≤ Mn ≤ 1.00 mass%;
P ≤ 0.05 mass%;
S ≤ 0.05 mass%;
Cu ≤ 0.10 mass%;
20.0 mass% ≤ Cr ≤ 25.0 mass%;
V ≤ 0.10 mass%;
Co < 0.10 mass%;
Al ≤ 0.10 mass%;
0.01 mass% ≤ Ti ≤ 0.30 mass%;
N < 0.03 mass%; and
0.05 mass% ≤ La ≤ 0.30 mass%; and
at least one selected from the group consisting of
   0.10 mass% ≤ W ≤ 2.00 mass% and
   0.10 mass% ≤ Mo ≤ 2.00 mass%,
with a balance being Fe and unavoidable impurities.

The ferritic stainless steel according to the present invention may further contain 0 mass% ≤ Ni ≤ 2.00 mass%.

The steel sheet according to the present invention is made of the ferritic stainless steel according to the present invention.

Ce contained in REM (mischmetal) has an effect of improving oxidation resistance of the ferritic stainless steel, but has a large effect of decreasing hot workability. In contrast, La has an effect of improving the oxidation resistance of the ferritic stainless steel, and has a smaller effect of decreasing the hot workability than Ce. Therefore, in the case where an appropriate amount of La is added to the ferritic stainless steel instead of Ce, the oxidation resistance can be improved without significantly decreasing the hot workability of the ferritic stainless steel.

When the content ofAl is limited in the ferritic stainless steel, it is possible to prevent an increase in the thermal expansion coefficient and a decrease in the electron conductivity due to the formation of an insulating oxide film.

Mn and Ti have an effect of preventing volatilization of CrO₃ (Cr-poisoning resistance) by forming a Cr-Mn spinel oxide or a Ti oxide when the ferritic stainless steel is exposed to a high-temperature oxidizing atmosphere.

Further, W and Mo both form a solid solution in a matrix and have an effect of improving the oxidation resistance of the steel. Therefore, in the case where W and/or Mo are/is further added, the oxidation resistance of the ferritic stainless steel is further improved.

### DESCRIPTION OF EMBODIMENTS

Hereinafter, an embodiment of the present invention will be described in detail.

### [1. Ferritic Stainless Steel]

### [1.1. First Main Components]

A ferritic stainless steel according to the present invention contains the following elements, with the balance being Fe and unavoidable impurities. Types of added elements, component ranges thereof, and reasons for limitation thereof are as follows.

### (1) C ≤ 0.03 mass%:

In the case where the content of C is excessive, the concentration of Cr in a matrix decreases due to the formation of a Cr carbide, and the oxidation resistance of the steel may decrease. Therefore, the content of C needs to be 0.03 mass% or less. The content of C is preferably 0.02 mass% or less, and more preferably 0.01 mass% or less.

On the other hand, C is also an element that is unavoidably incorporated, and reducing the content of C more than necessary leads to an increase in cost. Therefore, it is preferable to select an optimum value for the content of C in consideration of the manufacturing cost. In the present invention, the lower the content of C, the better. For example, the content of C may be 0.00001 mass% or more in consideration of the manufacturing cost.

### (2) Si ≤ 0.05 mass%:

In the case where the content of Si is excessive, a Si-based oxide is formed in an outermost layer of the steel during oxidation, and the contact resistance of the steel may increase. Therefore, the content of Si needs to be 0.05 mass% or less. The content of Si is preferably 0.03 mass% or less.

On the other hand, Si is also an element that is unavoidably mixed, and reducing the content of Si more than necessary leads to an increase in cost. Therefore, it is preferable to select an optimum value for the content of Si in consideration of the manufacturing cost. In the present invention, the lower the content of Si, the better. For example, the content of Si may be 0.00001 mass% or more in consideration of the manufacturing cost.

### (3) 0.30 mass% ≤ Mn ≤ 1.00 mass%:

In the case where the ferritic stainless steel containing a large amount of Cr is heated to a high temperature, CrO₃ is likely to be volatilized from the ferritic stainless steel. The poisoning of the air electrode (cathode) of the SOFC is more likely to occur due to the volatilized Cr. In contrast, Mn has an effect of preventing volatilization of CrO₃ by forming an oxide (Mn-based spinel oxide) together with Cr during oxidation. In order to achieve such effects, the content of Mn needs to be 0.30 mass% or more. The content of Mn is preferably 0.40 mass% or more. Also preferably, the content of Mn is at least 10 or 11 times the Si content.

On the other hand, since Mn is easily oxidized, oxidation resistance of steel may decrease in the case where the content of Mn is excessive. Therefore, the content of Mn needs to be 1.00 mass% or less. The content of Mn is preferably 0.80 mass% or less.

### (4) P ≤ 0.05 mass%:

In the case where the content of P is excessive, hot workability and cold workability may decrease. Therefore, the content of P needs to be 0.05 mass% or less. The content of P is preferably 0.03 mass% or less.

On the other hand, P is an element that is unavoidably incorporated, and reducing the content of P more than necessary leads to an increase in cost. Therefore, it is preferable to select an optimum value for the content of P in consideration of the manufacturing cost. In the present invention, the lower the content of P, the better. For example, the content of P may be 0.00001 mass% or more in consideration of the manufacturing cost.

### (5) S ≤ 0.05 mass%:

In the case where the content of S is excessive, hot workability and cold workability may decrease. Therefore, the content of S needs to be 0.05 mass% or less. The content of S is preferably 0.03 mass% or less.

On the other hand, S is also an element that is unavoidably incorporated, and reducing the content of S more than necessary leads to an increase in cost. Therefore, it is preferable to select an optimum value for the content of S in consideration of the manufacturing cost. In the present invention, the lower the content of S, the better. For example, the content of S may be 0.00001 mass% or more in consideration of the manufacturing cost.

### (6) Cu ≤ 0.10 mass%:

In the case where the content of Cu is excessive, hot workability and cold workability may decrease. Therefore, the content of Cu needs to be 0.10 mass% or less. The content of Cu is preferably 0.05 mass% or less.

On the other hand, reducing the content of Cu more than necessary may lead to an increase in cost. Therefore, it is preferable to select an optimum value for the content of Cu in consideration of the manufacturing cost. In the present invention, the lower the content of Cu, the better. For example, the content of Cu may be 0.0001 mass% or more in consideration of the manufacturing cost.

### (7) 20.0 mass% ≤ Cr ≤ 25.0 mass%:

Cr has an effect of improving oxidation resistance of the steel. In order to achieve such effects, the content of Cr needs to be 20.0 mass% or more. The content of Cr is preferably 21.0 mass% or more, and more preferably 21.5 mass% or more.

On the other hand, in the case where the content of Cr is excessive, a large amount of CrO₃ is generated when the steel is heated in a high-temperature oxidizing atmosphere, and CrO₃ is likely to be volatilized from the surface of the steel. Therefore, the content of Cr needs to be 25.0 mass% or less. The content of Cr is preferably 24.0 mass% or less, and more preferably 23.5 mass% or less.

### (8) V ≤ 0.10 mass%:

In the case where the content of V is excessive, hot workability and cold workability may decrease. Therefore, the content of V needs to be 0.10 mass% or less. The content of V is preferably 0.09 mass% or less.

On the other hand, reducing the content of V more than necessary may lead to an increase in cost. Therefore, it is preferable to select an optimum value for the content of V in consideration of the manufacturing cost. In the present invention, the lower the content of V, the better. For example, the content of V may be 0.0001 mass% or more in consideration of the manufacturing cost.

### (9) Co ≤ 0.10 mass%:

In the case where the content of Co is excessive, hot workability and cold workability may decrease. Therefore, the content of Co needs to be 0.10 mass% or less. The content of Co is preferably 0.09 mass% or less.

On the other hand, reducing the content of Co more than necessary may lead to an increase in cost. Therefore, it is preferable to select an optimum value for the content of Co in consideration of the manufacturing cost. In the present invention, the lower the content of Co, the better. For example, the content of Co may be 0.0001 mass% or more in consideration of the manufacturing cost.

### (10) Al ≤ 0.10 mass%:

In the case where the content of Al is excessive, a thermal expansion coefficient of steel may increase. Therefore, the content of Al needs to be 0.10 mass% or less. The content of Al is more preferably 0.05 mass% or less.

On the other hand, reducing the content of Al more than necessary may lead to an increase in cost. Therefore, it is preferable to select an optimum value for the content of Al in consideration of the manufacturing cost. In the present invention, the lower the content of Al, the better. For example, the content of Al may be 0.0001 mass% or more in consideration of the manufacturing cost.

### (11) 0.01 mass% ≤ Ti ≤ 0.30 mass%:

Ti has an effect of improving the oxidation resistance of the steel by forming a Ti carbide and/or a Ti nitride and preventing the formation of a Cr carbide and/or a Cr nitride. In addition, Ti has an effect of preventing volatilization of CrO₃ by forming a Ti oxide during oxidation. In order to achieve such effects, the content of Ti needs to be 0.01 mass% or more. The content of Ti is preferably 0.05 mass% or more.

On the other hand, in the case where the content of Ti is excessive, hot workability and cold workability may decrease. Therefore, the content of Ti needs to be 0.30 mass% or less. The content of Ti is preferably 0.20 mass% or less, more preferably less than half the La content.

### (12) N ≤ 0.03 mass%:

In the case where the content of N is excessive, the concentration of Cr in the matrix decreases due to the formation of a Cr nitride, and the oxidation resistance of the steel may decrease. Therefore, the content of N needs to be 0.03 mass% or less. The content of N is preferably 0.02 mass% or less.

On the other hand, N is also an element that is unavoidably incorporated, and reducing the content of N more than necessary leads to an increase in cost. Therefore, it is preferable to select an optimum value for the content of N in consideration of the manufacturing cost. In the present invention, the lower the content of N, the better. For example, the content of N may be 0.00001 mass% or more in consideration of the manufacturing cost.

### (13) 0.05 mass% ≤ La ≤ 0.30 mass%:

La has an effect of improving the oxidation resistance of the steel without significantly decreasing the hot workability and cold workability of the steel. In order to achieve such effects, the content of La needs to be 0.05 mass% or more. The content of La is preferably 0.07 mass% or more, more preferably more than 0.10 mass%, and still more preferably 0.11 mass% or more.

On the other hand, in the case where the content of La is excessive, hot workability and cold workability may decrease. Therefore, the content of La needs to be 0.30 mass% or less. The content of La is preferably 0.20 mass% or less.

### [1.2. Second Main Components]

The ferritic stainless steel according to the present invention further contains at least one of the following elements in addition to the above-described elements. Types of added elements, component ranges thereof, and reasons for limitation thereof are as follows.

### (14) 0.10 mass% ≤ W ≤ 2.00 mass%:

W forms a solid solution in a matrix and has an effect of improving the oxidation resistance of the steel. In the case where W is contained in the steel, the content of W is preferably 0.10 mass% or more in order to achieve such effects. The content of W is more preferably 0.20 mass% or more.

On the other hand, in the case where the content of W is excessive, hot workability and cold workability may decrease. Therefore, the content of W is preferably 2.00 mass% or less. The content of W is more preferably 1.50 mass% or less.

In addition, W has an effect of reducing the thermal expansion coefficient of the steel. Therefore, it is preferable to adjust the thermal expansion coefficient of the steel by the addition in a range of 0.10 mass% to 2.00 mass%.

### (15) 0.10 mass% ≤ Mo ≤ 2.00 mass%:

Mo forms a solid solution in a matrix and has an effect of improving the oxidation resistance of the steel. In the case where Mo is contained in the steel, the content of Mo is preferably 0.10 mass% or more in order to achieve such effects. The content of Mo is more preferably 0.20 mass% or more.

On the other hand, in the case where the content of Mo is excessive, hot workability and cold workability may decrease. Therefore, the content of Mo is preferably 2.00 mass% or less. The content of Mo is more preferably 1.50 mass% or less.

In addition, Mo has an effect of reducing the thermal expansion coefficient of the steel. Therefore, it is preferable to adjust the thermal expansion coefficient of the steel by the addition in a range of 0.10 mass% to 2.00 mass%.

### [1.3. Subcomponents]

The ferritic stainless steel according to the present invention may further contain the following elements in addition to the above-described elements. Types of added elements, component ranges thereof, and reasons for limitation thereof are as follows.

### (16) 0 mass% ≤ Ni ≤ 2.00 mass%:

Ni is an element having an effect of improving corrosion resistance, and can be contained as necessary. In order to obtain such an effect, the content of Ni is preferably more than 0.1 mass%. The content of Ni is more preferably 1.0 mass% or more.

In addition, Ni has an effect of increasing the thermal expansion coefficient of the steel. Therefore, in the case where the content of Ni is excessive, the thermal expansion coefficient of the steel may increase. Therefore, it is preferable to adjust the thermal expansion coefficient of the steel by adding Ni in a content of 2.00 mass% or less. The content of Ni is preferably 1.70 mass% or less.

### [1.4. Unavoidable Impurities]

The unavoidable impurities mean elements mixed in from ores or scraps used as steel raw materials, or from the environment of a production process or the like. Specifically, in addition to C, Si, P, and S described above, other elements may be further contained as unavoidable impurities. Specifically, Ni < 0.1 mass%, Ce < 0.01 mass% and the like are exemplified.

### [2. Steel Sheet]

The steel sheet according to the present invention is made of the ferritic stainless steel according to the present invention.

### [2.1. Ferritic Stainless Steel]

Details of the ferritic stainless steel are as described above, and the description thereof is omitted.

### [2.2. Thickness]

The thickness of the steel sheet according to the present invention is not particularly limited, and an optimum thickness can be selected according to the purpose. For example, in the case where the steel sheet according to the present invention is used as a separator for the SOFC or a separator for the SOEC, the SOFC and the SOEC may be increased in size if the thickness is too large. Therefore, the thickness is preferably 3.5 mm or less. The thickness is more preferably 3.0 mm or less.

On the other hand, in the case where the thickness is too small, the strength and/or oxidation resistance of the steel sheet may decrease. Therefore, the thickness is preferably 0.1 mm or more. The thickness is more preferably 0.5 mm or more.

### [2.3. Application]

The steel sheet according to the present invention can be used for various applications requiring a low thermal expansion coefficient, and excellent heat resistance, electron conductivity, oxidation resistance, and hot workability. The steel sheet according to the present invention is particularly suitable as a material of a separator for a solid oxide fuel cell (SOFC) or a material of a separator for a solid oxide electrolysis cell (SOEC).

### [3. Method for Producing Steel Sheet]

The steel sheet according to the present invention can be produced by
(a) melting and casting raw materials blended to have predetermined components, to prepare a steel ingot,
(b) performing a homogenization heat treatment on the steel ingot as necessary,
(c) performing a hot working on the steel ingot to prepare a hot-worked body,
(d) performing a primary annealing on the hot-worked body as necessary,
(e) performing a cold working on the hot-worked body as necessary to prepare a cold-worked body, and
(f) performing a secondary annealing on the hot-worked body or the cold-worked body.

### [3.1. Melting and Casting Step]

First, the raw materials blended to have predetermined components are melted and cast, to prepare a steel ingot. The melting conditions and the casting conditions are not particularly limited, and optimal conditions can be selected according to the purpose.

### [3.2. Homogenization Heat Treatment Step]

Next, a homogenization heat treatment is performed on the steel ingot as necessary. The homogenization heat treatment is performed to homogenize components of the steel ingot. In the case where the component segregation of the steel ingot is not a problem, the homogenization heat treatment can be omitted. Conditions of the homogenization heat treatment are not particularly limited, and optimal conditions can be selected according to the purpose.

### [3.3. Hot Working Step]

Next, a hot working is performed on the steel ingot to prepare a hot-worked body. The "steel ingot" to be subjected to the hot working refers to a steel ingot as it is obtained by the melting and casting step or a steel ingot subjected to the homogenization heat treatment. The hot working is performed to process the steel ingot into a final product shape or to process the steel ingot into a rough material suitable for cold working. Conditions of the hot working are not particularly limited, and optimal conditions can be selected according to the purpose.

### [3.4. Primary Annealing Step]

Next, a primary annealing is performed on the hot-worked body as necessary.

In the case where a cold working is further performed on the hot-worked body, it is preferable to perform the primary annealing on the hot-worked body. The primary annealing is performed to remove strain contained in the hot-worked body and to improve cold workability. Therefore, in the case where the cold working is not performed or in the case where cold workability of the hot-worked body is high, the primary annealing can be omitted. Conditions of the primary annealing are not particularly limited, and optimal conditions can be selected according to the purpose.

### [3.5. Cold Working Step]

Next, a cold working is performed on the hot-worked body as necessary. The "hot-worked body" to be subjected to the cold working refers to a hot-worked body subjected to only hot working, or a hot-worked body subjected to the primary annealing after the hot working.

The cold working is performed particularly in the case where high dimensional accuracy is required. Therefore, in the case where high dimensional accuracy is not required for the steel sheet, the cold working can be omitted. Conditions of the cold working are not particularly limited, and optimal conditions can be selected according to the purpose.

### [3.6. Secondary Annealing Step]

Next, a secondary annealing is performed on the hot-worked body or the cold-worked body. The "hot-worked body" to be subjected to the secondary annealing refers to a hot-worked body subjected to only the hot working.

The secondary annealing is performed to remove strain contained in the hot-worked body or the cold-worked body. Conditions of the secondary annealing are not particularly limited, and optimal conditions can be selected according to the purpose. The steel sheet thus obtained can be used for various applications after being subjected to additional processing as necessary.

### [4. Effects]

Ce contained in REM (mischmetal) has an effect of improving oxidation resistance of the ferritic stainless steel, but has a large effect of decreasing hot workability. In contrast, La has an effect of improving the oxidation resistance of the ferritic stainless steel, and has a smaller effect of decreasing the hot workability than Ce. Therefore, in the case where an appropriate amount of La is added to the ferritic stainless steel instead of Ce, oxidation resistance can be improved without significantly decreasing the hot workability of the ferritic stainless steel.

When the content ofAl is limited in the ferritic stainless steel, it is possible to prevent an increase in the thermal expansion coefficient and a decrease in the electron conductivity due to the formation of an insulating oxide film.

Mn and Ti have an effect of preventing volatilization of CrO₃ by forming a Cr-Mn spinel oxide or a Ti oxide when the ferritic stainless steel is exposed to a high-temperature oxidizing atmosphere.

Further, W and Mo both form a solid solution in a matrix and have an effect of improving the oxidation resistance of the steel. Therefore, in the case where W and/or Mo are/is further added in addition to the above-described elements, the oxidation resistance of the ferritic stainless steel is further improved.

### [Examples]

### (Examples 1 to 16 and Comparative Examples 1 to 20)

### [1. Preparation of Samples]

Raw materials blended to have the respective composition shown in Tables 1 and 2 were melted in a vacuum induction heating furnace to obtain an ingot of 15 kg. Next, the ingot was subjected to a homogenization heat treatment to heat the ingot at 1200°C for 4 hours. Thereafter, the ingot was subjected to a hot forging at 1100°C to shape into a thick plate shape having a thickness of 30 mm.

Further, the thick plate was subjected to a hot rolling at 1100°C to form a plate having a thickness of 10 mm.

The thus obtained plate-shaped hot-formed body was subjected to an annealing treatment (primary annealing) of holding the hot-formed body at 1100°C for 2 hours followed by air cooling. Next, the obtained annealed plate was subjected to a cold rolling at room temperature to obtain a cold-formed body having a thickness of 2.5 mm. Further, the obtained cold-formed body was subjected to a vacuum annealing treatment (secondary annealing) of heating the cold-formed body at 800°C for 4 hours.

**Table 1**

| | Composition (mass%) | | | | | | | | |
|---|---|---|---|---|---|---|---|---|---|
| | Fe | C | Si | Mn | P | S | Cu | Ni | Cr |
| Example 1 | Balance | 0.008 | < 0.01 | 0.49 | < 0.05 | < 0.05 | < 0.1 | 1.5 | 23.4 |
| Example 2 | Balance | 0.012 | 0.01 | 0.58 | < 0.05 | < 0.05 | < 0.1 | 1.2 | 22.6 |
| Example 3 | Balance | 0.012 | 0.04 | 0.60 | < 0.05 | < 0.05 | < 0.1 | < 0.01 | 23.3 |
| Example 4 | Balance | 0.017 | < 0.01 | 0.72 | < 0.05 | < 0.05 | < 0.1 | 1.1 | 22.1 |
| Example 5 | Balance | 0.030 | 0.02 | 0.66 | < 0.05 | < 0.05 | < 0.1 | 0.6 | 22.2 |
| Example 6 | Balance | 0.009 | < 0.01 | 0.30 | < 0.05 | < 0.05 | < 0.1 | 1.0 | 21.5 |
| Example 7 | Balance | 0.020 | 0.02 | 0.93 | < 0.05 | < 0.05 | < 0.1 | 1.7 | 22.0 |
| Example 8 | Balance | 0.009 | 0.04 | 0.44 | < 0.05 | < 0.05 | < 0.1 | 0.3 | 20.8 |
| Example 9 | Balance | 0.007 | < 0.01 | 0.78 | < 0.05 | < 0.05 | < 0.1 | 1.3 | 24.7 |
| Example 10 | Balance | 0.014 | < 0.01 | 0.42 | < 0.05 | < 0.05 | < 0.1 | 0.2 | 23.6 |
| Example 11 | Balance | 0.010 | 0.02 | 0.44 | < 0.05 | < 0.05 | < 0.1 | < 0.01 | 21.7 |
| Example 12 | Balance | 0.018 | 0.01 | 0.41 | < 0.05 | < 0.05 | < 0.1 | 0.6 | 23.3 |
| Example 13 | Balance | 0.011 | 0.02 | 0.44 | < 0.05 | < 0.05 | < 0.1 | < 0.01 | 23.7 |
| Example 14 | Balance | 0.008 | 0.02 | 0.43 | < 0.05 | < 0.05 | < 0.1 | 1.0 | 22.4 |
| Example 15 | Balance | 0.017 | 0.05 | 0.77 | < 0.05 | < 0.05 | < 0.1 | < 0.01 | 22.1 |
| Example 16 | Balance | 0.010 | 0.01 | 0.60 | < 0.05 | < 0.05 | < 0.1 | 1.5 | 23.0 |

| | Composition (mass%) | | | | | | | | |
|---|---|---|---|---|---|---|---|---|---|
| | V | Co | Al | Ti | La | Ce | W | Mo | N |
| Example 1 | < 0.1 | < 0.1 | < 0.05 | 0.11 | 0.12 | < 0.01 | 0.5 | < 0.01 | 0.004 |
| Example 2 | < 0.1 | < 0.1 | < 0.05 | 0.19 | 0.17 | < 0.01 | 1.3 | < 0.01 | 0.008 |
| Example 3 | < 0.1 | < 0.1 | < 0.05 | 0.18 | 0.11 | < 0.01 | 0.2 | 0.4 | 0.012 |
| Example 4 | < 0.1 | < 0.1 | < 0.05 | 0.10 | 0.11 | < 0.01 | < 0.01 | 1.0 | 0.008 |
| Example 5 | < 0.1 | < 0.1 | < 0.05 | 0.05 | 0.09 | < 0.01 | 0.8 | 0.1 | 0.005 |
| Example 6 | < 0.1 | < 0.1 | < 0.05 | 0.11 | 0.07 | < 0.01 | 0.9 | < 0.01 | 0.014 |
| Example 7 | < 0.1 | < 0.1 | < 0.05 | 0.15 | 0.15 | < 0.01 | 0.5 | 0.5 | 0.010 |
| Example 8 | < 0.1 | < 0.1 | < 0.05 | 0.18 | 0.15 | < 0.01 | 1.3 | < 0.01 | 0.008 |
| Example 9 | < 0.1 | < 0.1 | < 0.05 | 0.08 | 0.09 | < 0.01 | 0.1 | 0.9 | 0.006 |
| Example 10 | < 0.1 | < 0.1 | 0.06 | 0.16 | 0.08 | < 0.01 | < 0.01 | 1.2 | 0.012 |
| Example 11 | < 0.1 | < 0.1 | < 0.05 | 0.03 | 0.10 | < 0.01 | 0.3 | < 0.01 | 0.009 |
| Example 12 | < 0.1 | < 0.1 | < 0.05 | 0.27 | 0.09 | < 0.01 | 0.5 | 0.2 | 0.009 |
| Example 13 | < 0.1 | <0.1 | < 0.05 | 0.14 | 0.19 | < 0.01 | 0.1 | < 0.01 | 0.014 |
| Example 14 | < 0.1 | <0.1 | < 0.05 | 0.05 | 0.07 | < 0.01 | 1.9 | < 0.01 | 0.007 |
| Example 15 | < 0.1 | < 0.1 | < 0.05 | 0.06 | 0.10 | < 0.01 | < 0.01 | 1.7 | 0.011 |
| Example 16 | < 0.1 | <0.1 | < 0.05 | 0.09 | 0.16 | < 0.01 | 0.9 | 0.6 | 0.003 |

**Table 2**

| | Composition (mass%) | | | | | | | | |
|---|---|---|---|---|---|---|---|---|---|
| | Fe | C | Si | Mn | P | S | Cu | Ni | Cr |
| Comp. Ex. 1 | Balance | 0.049 | < 0.01 | 0.60 | < 0.05 | < 0.05 | < 0.1 | 0.2 | 24.4 |
| Comp. Ex. 2 | Balance | 0.014 | 0.10 | 0.61 | < 0.05 | < 0.05 | < 0.1 | 0.4 | 22.5 |
| Comp. Ex. 3 | Balance | 0.008 | 0.01 | 0.22 | < 0.05 | < 0.05 | < 0.1 | 1.8 | 23.4 |
| Comp. Ex. 4 | Balance | 0.019 | 0.03 | 1.61 | < 0.05 | < 0.05 | < 0.1 | < 0.01 | 21.9 |
| Comp. Ex. 5 | Balance | 0.009 | 0.01 | 0.72 | < 0.05 | < 0.05 | 0.51 | 0.6 | 23.4 |
| Comp. Ex. 6 | Balance | 0.027 | < 0.01 | 0.44 | < 0.05 | < 0.05 | < 0.1 | 2.7 | 23.3 |
| Comp. Ex. 7 | Balance | 0.013 | 0.03 | 0.79 | < 0.05 | < 0.05 | < 0.1 | < 0.01 | 19.2 |
| Comp. Ex. 8 | Balance | 0.029 | < 0.01 | 0.41 | < 0.05 | < 0.05 | < 0.1 | < 0.01 | 25.4 |
| Comp. Ex. 9 | Balance | 0.014 | 0.01 | 0.33 | < 0.05 | < 0.05 | < 0.1 | < 0.01 | 22.3 |
| Comp. Ex. 10 | Balance | 0.011 | < 0.01 | 0.66 | < 0.05 | < 0.05 | < 0.1 | 1.2 | 22.5 |
| Comp. Ex. 11 | Balance | 0.010 | < 0.01 | 0.49 | < 0.05 | < 0.05 | < 0.1 | 1.0 | 20.8 |
| Comp. Ex. 12 | Balance | 0.012 | 0.01 | 0.74 | < 0.05 | < 0.05 | < 0.1 | 1.3 | 22.7 |
| Comp. Ex. 13 | Balance | 0.011 | < 0.01 | 0.55 | < 0.05 | < 0.05 | < 0.1 | 1.5 | 23.6 |
| Comp. Ex. 14 | Balance | 0.011 | < 0.01 | 0.30 | < 0.05 | < 0.05 | < 0.1 | 0.3 | 22.0 |
| Comp. Ex. 15 | Balance | 0.009 | 0.02 | 0.71 | < 0.05 | < 0.05 | < 0.1 | 0.6 | 23.3 |
| Comp. Ex. 16 | Balance | 0.011 | 0.02 | 0.44 | < 0.05 | < 0.05 | < 0.1 | < 0.01 | 23.0 |
| Comp. Ex. 17 | Balance | 0.013 | 0.01 | 0.40 | < 0.05 | < 0.05 | < 0.1 | < 0.01 | 22.7 |
| Comp. Ex. 18 | Balance | 0.015 | < 0.01 | 0.57 | < 0.05 | < 0.05 | < 0.1 | 1.1 | 23.3 |
| Comp. Ex. 19 | Balance | 0.014 | < 0.01 | 0.45 | < 0.05 | < 0.05 | < 0.1 | < 0.01 | 22.2 |
| Comp. Ex. 20 | Balance | 0.009 | 0.01 | 0.80 | < 0.05 | < 0.05 | < 0.1 | 0.5 | 22.1 |

| | Composition (mass%) | | | | | | | | |
|---|---|---|---|---|---|---|---|---|---|
| | V | Co | Al | Ti | La | Ce | W | Mo | N |
| Comp. Ex. 1 | < 0.1 | < 0.1 | < 0.05 | 0.13 | 0.10 | < 0.01 | 0.3 | 0.1 | 0.010 |
| Comp. Ex. 2 | < 0.1 | < 0.1 | < 0.05 | 0.10 | 0.08 | < 0.01 | 0.6 | < 0.01 | 0.004 |
| Comp. Ex. 3 | < 0.1 | < 0.1 | < 0.05 | 0.06 | 0.10 | < 0.01 | < 0.01 | 0.4 | 0.006 |
| Comp. Ex. 4 | < 0.1 | < 0.1 | < 0.05 | 0.11 | 0.11 | < 0.01 | < 0.01 | 0.3 | 0.009 |
| Comp. Ex. 5 | < 0.1 | < 0.1 | < 0.05 | 0.08 | 0.10 | < 0.01 | 1.2 | 0.1 | 0.006 |
| Comp. Ex. 6 | < 0.1 | < 0.1 | < 0.05 | 0.11 | 0.08 | < 0.01 | 0.5 | < 0.01 | 0.006 |
| Comp. Ex. 7 | < 0.1 | < 0.1 | < 0.05 | 0.14 | 0.12 | < 0.01 | 0.1 | 0.7 | 0.008 |
| Comp. Ex. 8 | < 0.1 | < 0.1 | < 0.05 | 0.01 | 0.09 | < 0.01 | 0.9 | < 0.01 | 0.008 |
| Comp. Ex. 9 | 0.46 | < 0.1 | < 0.05 | 0.05 | 0.11 | < 0.01 | < 0.01 | 0.6 | 0.009 |
| Comp. Ex. 10 | < 0.1 | 0.38 | < 0.05 | 0.14 | 0.17 | < 0.01 | < 0.01 | 1.3 | 0.010 |
| Comp. Ex. 11 | < 0.1 | < 0.1 | 0.23 | 0.15 | 0.15 | < 0.01 | 0.4 | 0.1 | 0.006 |
| Comp. Ex. 12 | < 0.1 | < 0.1 | < 0.05 | < 0.01 | 0.08 | < 0.01 | 1.8 | 0.2 | 0.009 |
| Comp. Ex. 13 | < 0.1 | <0.1 | < 0.05 | 0.54 | 0.08 | < 0.01 | 0.6 | 0.3 | 0.009 |
| Comp. Ex. 14 | < 0.1 | <0.1 | < 0.05 | 0.05 | 0.02 | < 0.01 | 0.5 | < 0.01 | 0.010 |
| Comp. Ex. 15 | < 0.1 | < 0.1 | < 0.05 | 0.11 | 0.33 | < 0.01 | 0.7 | 0.1 | 0.006 |
| Comp. Ex. 16 | < 0.1 | <0.1 | < 0.05 | 0.07 | 0.11 | < 0.01 | < 0.01 | < 0.01 | 0.004 |
| Comp. Ex. 17 | < 0.1 | <0.1 | < 0.05 | 0.09 | 0.09 | < 0.01 | 2.8 | 0.1 | 0.008 |
| Comp. Ex. 18 | < 0.1 | < 0.1 | < 0.05 | 0.08 | 0.09 | < 0.01 | < 0.01 | 2.5 | 0.010 |
| Comp. Ex. 19 | < 0.1 | < 0.1 | < 0.05 | 0.19 | 0.08 | < 0.01 | 0.5 | 0.1 | 0.038 |
| Comp. Ex. 20 | < 0.1 | < 0.1 | < 0.05 | 0.05 | 0.06 | 0.06 | < 0.01 | 0.3 | 0.009 |

### [2. Test Method]

### [2.1. Workability]

The workability was evaluated based on the degree of cracks generated in the obtained formed body in the above-described hot rolling and cold rolling.

### [2.2. Continuous Oxidation Test]

A test piece for a continuous oxidation test was prepared by cutting the formed body after the vacuum annealing treatment into a size of 2.5 mm × 15 mm × 20 mm. An oxidation test was performed for 100 hours in the air at 800°C in accordance with the high-temperature continuous oxidation test method of a metal material specified in JIS Z2281 (1993).

### [2.3. Cr evaporation test]

A test piece for a Cr evaporation test was prepared by cutting the formed body after the vacuum annealing treatment into a size of 2.5 mm × 15 mm × 50 mm. The cut test piece was placed in a quartz tube and exposed to the air humidified with a dew point of 80°C, at 800°C for 100 hours. After the test, the Cr oxide adhering to the inside of the quartz tube was dissolved in dilute sulfuric acid, and the content of Cr was measured by ICP emission spectroscopy to calculate the amount of Cr evaporated.

### [2.4. Measurement of Thermal Expansion Coefficient]

A test piece for a measurement of a thermal expansion coefficient was prepared by cutting the formed body after the vacuum annealing into a size of 2.5 mm × 6 mm × 19 mm. The thermal expansion coefficients from 28°C to 800°C were measured in accordance with a method for measuring a linear expansion coefficient of a metal material specified in JIS Z2285 (2003).

### [2.5. Measurement of Contact Resistance]

A test piece for a measurement of contact resistance was prepared by cutting the formed body after the vacuum annealing into a size of 2.5 mm × 15 mm × 20 mm. The cut test piece was oxidized at 800°C in the atmosphere for 100 hours. The oxidized test piece was sandwiched and fixed between 10 mm × 10 mm Pt plates to which Pt wires for current application and voltage measurement were joined, and the contact resistance was measured by a four-terminal method.

### [3. Results]

The results are shown in Table 3. The followings can be understood from Table 3.

In relation to workability,
"S" indicates that a cold-formed body having no crack was able to be produced,
"A" indicates that a cold-formed body was able to be produced without a polishing treatment although slight cracks were generated during the hot rolling,
"B" indicates that a cold-formed body was not able to be produced without a polishing treatment because cracks were generated during the hot rolling, but a cold-formed body was able to be produced by polishing the hot-formed body, and
"C" indicates that the cold rolling was not able to be performed because the plate was cracked during the hot rolling.

In relation to the oxidation resistance,
"S" indicates that an increase in oxidation amount was 0.4 mg/cm² or less,
"A" indicates that an increase in oxidation amount was more than 0.4 mg/cm² and 0.6 mg/cm² or less,
"B" indicates that an increase in oxidation amount was more than 0.6 mg/cm² and 0.8 mg/cm² or less, and
"C" indicates that an increase in oxidation amount was more than 0.8 mg/cm².

In relation to Cr-poisoning resistance,
"S" indicates that the Cr evaporation amount was 80 µg/cm² or less,
"A" indicates that the Cr evaporation amount was more than 80 µg/cm² and 90 µg/cm² or less,
"B" indicates that the Cr evaporation amount was more than 90 µg/cm² and 100 µg/cm² or less, and
"C" indicates that the Cr evaporation amount was more than 100 µg/cm².

In relation to the thermal expansion coefficient,
"S" indicates that the thermal expansion coefficient was 12.25×10⁻⁶/°C or less,
"A" indicates that the thermal expansion coefficient was more than 12.25×10⁻⁶/°C and 12.30×10⁻⁶/°C or less,
"B" indicates that the thermal expansion coefficient was more than 12.30×10⁻⁶/°C and 12.35×10⁻⁶/°C or less, and
"C" indicates that the thermal expansion coefficient was more than 12.35×10⁻⁶/°C.

In relation to the contact resistance,
"S" indicates that the contact resistance was 40 mΩ·cm² or less,
"A" indicates that the contact resistance was more than 40 mΩ·cm² and 45 mΩ·cm² or less,
"B" indicates that the contact resistance was more than 45 mΩ·cm² and 50 mΩ·cm² or less, and
"C" indicates that the contact resistance was more than 50 mΩ·cm².

(1) In Comparative Example 1, the oxidation resistance decreased. The reason is considered to be that Cr in the matrix was consumed for the formation of a Cr carbide due to an excessive content of C.
(2) In Comparative Example 2, the contact resistance slightly increased. The reason is considered to be that a Si oxide was formed in the outermost layer due to an excessive content of Si.
(3) In Comparative Example 3, the Cr-poisoning resistance decreased. The reason is considered to be that a Mn-Cr-based oxide was hardly formed due to the small content of Mn. On the other hand, in Comparative Example 4, the oxidation resistance decreased. The reason is considered to be that the content of Mn was excessive.
(4) In Comparative Example 5, the workability slightly decreased. The reason is considered to be that the content of Cu was excessive.
(5) In Comparative Example 6, the thermal expansion coefficient increased. The reason is considered to be that Ni was excessive.
(6) In Comparative Example 7, the oxidation resistance slightly decreased. The reason is considered to be that the content of Cr was small. On the other hand, in Comparative Example 8, the Cr-poisoning resistance decreased. The reason is considered to be that the content of Cr was excessive.
(7) In Comparative Example 9, the workability slightly decreased. The reason is considered to be that a V-based carbonitride was generated due to the excessive content of V
(8) In Comparative Example 10, the workability slightly decreased. The reason is considered to be that the hardness of the material increased excessively due to the excessive content of Co.
(9) In Comparative Example 11, the thermal expansion coefficient increased. The reason is considered to be that the content of Al was excessive. In Comparative Example 11, the contact resistance slightly increased. The reason is considered to be that an Al-based oxide was formed in the outermost layer of the sample.
(10) In Comparative Example 12, the oxidation resistance slightly decreased. The reason is considered to be that the content of Ti was small. On the other hand, in Comparative Example 13, the workability slightly decreased. The reason is considered to be that the content of Ti was excessive.
(11) In Comparative Example 14, the oxidation resistance slightly decreased. The reason is considered to be that the content of La was small. On the other hand, in Comparative Example 15, the workability slightly decreased. The reason is considered to be that the content of La was excessive.
(12) In Comparative Example 16, the oxidation resistance slightly decreased. The reason is considered to be that neither W nor Mo was substantially contained. On the other hand, in each of Comparative Examples 17 and 18, the workability slightly decreased. The reason is considered to be that the content of W or the content of Mo was excessive.
(13) In Comparative Example 19, the oxidation resistance decreased. The reason is considered to be that Cr in the matrix was consumed for the formation of a carbonitride due to the excessive content of N.
(14) In Comparative Example 20, the workability slightly decreased. The reason is considered to be that the content of Ce was excessive.
(15) Examples 1 to 16 were all excellent in workability, oxidation resistance, and Cr-poisoning resistance.
   In all of Examples 1 to 16, the thermal expansion coefficient and the contact resistance were reduced. The reason is considered to be that W and/or Mo were/was contained in an appropriate amount in addition to the content of each component being optimized.
(16) Example 6, although the content of La was 0.07 mass%, exhibited oxidation resistance equivalent to that of Comparative Example 20 (content of Ce = 0.06 mass%), and exhibited workability better than that of Comparative Example 20. Similarly, Example 1, although the content of La was 0.12 mass%, exhibited oxidation resistance equivalent to that of Comparative Example 20, and exhibited workability better than that of Comparative Example 20.

**Table 3**

| | Workability | Oxidation resistance | Cr-poisoning resistance | Thermal expansion coefficient | Contact resistance |
|---|---|---|---|---|---|
| Example 1 | S | S | S | S | S |
| Example 2 | S | S | S | S | S |
| Example 3 | S | S | S | S | S |
| Example 4 | S | S | S | S | S |
| Example 5 | S | A | S | S | S |
| Example 6 | S | S | A | S | S |
| Example 7 | S | A | S | S | S |
| Example 8 | S | A | S | S | S |
| Example 9 | S | S | A | S | S |
| Example 10 | S | S | S | A | S |
| Example 11 | S | A | S | S | S |
| Example 12 | A | S | S | S | S |
| Example 13 | S | A | S | S | S |
| Example 14 | A | S | S | S | S |
| Example 15 | A | S | S | S | S |
| Example 16 | S | S | S | S | S |
| Comp. Ex. 1 | S | C | A | S | S |
| Comp. Ex. 2 | S | S | S | S | B |
| Comp. Ex. 3 | S | S | C | A | S |
| Comp. Ex. 4 | S | C | S | S | S |
| Comp. Ex. 5 | B | S | S | S | S |
| Comp. Ex. 6 | S | A | S | C | S |
| Comp. Ex. 7 | S | B | S | S | S |
| Comp. Ex. 8 | S | A | C | S | S |
| Comp. Ex. 9 | B | S | A | S | S |
| Comp. Ex. 10 | B | S | S | S | S |
| Comp. Ex. 11 | S | S | A | C | B |
| Comp. Ex. 12 | A | B | A | S | S |
| Comp. Ex. 13 | B | S | S | S | S |
| Comp. Ex. 14 | S | B | A | S | S |
| Comp. Ex. 15 | B | S | S | S | S |
| Comp. Ex. 16 | S | B | S | S | S |
| Comp. Ex. 17 | B | S | S | S | S |
| Comp. Ex. 18 | B | S | S | S | S |
| Comp. Ex. 19 | S | C | S | S | S |
| Comp. Ex. 20 | B | S | S | S | S |

Although the embodiment of the present invention has been described in detail above, the present invention is not limited to the above embodiment, and various modifications can be made without departing from the gist of the present invention.

This application is based on Japanese Patent Application No. 2023-206521 filed on December 6, 2023, the contents of which are incorporated herein by reference.

### INDUSTRIAL APPLICABILITY

The ferritic stainless steel according to the present invention can be used as a separator for a solid oxide fuel cell and a separator for a solid oxide electrolysis cell.

## Claims

1. A ferritic stainless steel consisting of:
C ≤ 0.03 mass%;
Si ≤ 0.05 mass%;
0.30 mass% ≤ Mn ≤ 1.00 mass%;
P ≤ 0.05 mass%;
S ≤ 0.05 mass%;
Cu ≤ 0.10 mass%;
20.0 mass% ≤ Cr ≤ 25.0 mass%;
V ≤ 0.10 mass%;
Co ≤ 0.10 mass%;
A1 ≤ 0.10 mass%;
0.01 mass% ≤ Ti ≤ 0.30 mass%;
N ≤ 0.03 mass%;
0.05 mass% ≤ La ≤ 0.30 mass%; and
at least one selected from the group consisting of
0.10 mass% ≤ W ≤ 2.00 mass% and
0.10 mass% ≤ Mo ≤ 2.00 mass%, and
optionally,
Ni ≤ 2.00 mass%,
with a balance being Fe and unavoidable impurities.

2. The ferritic stainless steel according to claim 1, further satisfying:
0.1 mass% < Ni ≤ 2.00 mass%.

3. The ferritic stainless steel according to claim 1 or 2, satisfying
0.40 mass% ≤ Mn ≤ 0.80 mass%.

4. The ferritic stainless steel according to one of claims 1 to 3, satisfying 21.0 mass% ≤ Cr ≤ 24.0 mass% or 21.5 mass% ≤ Cr ≤ 23.5 mass%.

5. The ferritic stainless steel according to one of claims 1 to 4, satisfying 0.05 mass% ≤ Ti ≤ 0.30 mass% or 0.05 mass% ≤ Ti ≤ 0.20 mass%.

6. The ferritic stainless steel according to one of claims 1 to 5, satisfying
0.07 mass% ≤ La ≤ 0.20 mass%.

7. The ferritic stainless steel according to one of claims 1 to 6, satisfying
0.20 mass% ≤ W ≤ 1.50 mass% or
0.20 mass% ≤ Mo ≤ 1.50 mass%.

8. A steel sheet comprising the ferritic stainless steel described in one of claims 1 to 7.

9. The steel sheet according to claim 8, having a thickness of 3.5 mm or less.

10. A method for preparing the steel sheet according to claim 8 or 9, the method comprising:
(a) melting and casting raw materials blended to have the predetermined components, to prepare a steel ingot,
(b) performing a homogenization heat treatment on the steel ingot as necessary,
(c) performing a hot working on the steel ingot to prepare a hot-worked body,
(d) performing a primary annealing on the hot-worked body as necessary,
(e) performing a cold working on the hot-worked body as necessary to prepare a cold-worked body, and
(f) performing a secondary annealing on the hot-worked body or the cold-worked body.

11. Use of the steel sheet described in claim 8 or 9, in a method of preparing a separator for a solid oxide fuel cell, SOFC, or for a solid oxide electrolysis cell, SOEC.

12. Use of the steel sheet according to claim 8 or 9, as a separator for a solid oxide fuel cell, SOFC, or for a solid oxide electrolysis cell, SOEC.

13. A separator for a solid oxide fuel cell, SOFC, or for a solid oxide electrolysis cell, SOEC, comprising the steel sheet described in claim 8 or 9, or as manufactured according to claim 11.

14. A solid oxide fuel cell, SOFC, comprising the separator according to claim 13.

15. A solid oxide electrolysis cell, SOEC, comprising the separator according to claim 13.
